# EUROPEAN PATENT APPLICATION

(11) **EP 1 754 415 A1**
(43) Date of publication of application: **21.02.2007**
(21) Application number: 05090239.4
(22) Date of filing: 18.08.2005
(51) Int. Cl.: A23L 1/305, A23L 1/31

(54) **Supplemental dietary composition for enhancing muscle performance and/or recovery from fatigue**

(71) Applicant: Gakic Formulations Ltd., Mississauga ON 14W 5S2 (CA)
(72) Inventor: Gardiner, Paul T., Mississauga Ontario L5H 2T4 (CA); Heuer, Marvin A., Etobicoke Ontario M8V 4B4 (CA)
(74) Representative: Ziebig, Marlene

(57) **Abstract**

A supplemental dietary composition which, e.g., enhances muscle performance or recovery from fatigue, including glycine and L-arginine alpha-ketoisocaproic acid calcium (GAKIC), wherein the L-arginine is in a base or monohydrochloride salt form, and an effective amount of a flavor component, e.g., a bitter-mask flavor, acesulfame potassium (ACE-K), etc. The GAKIC may be in granular or fine milled form. Also provided is a method of enhancing muscle performance or recovery from fatigue by consuming a supplemental dietary compositions that includes GAKIC and an effective amount of a flavor component. Also provided is a method for preparing compositions including GAKIC and an effective amount of a flavor component.

## Description

### Field of the Invention

The present invention relates to a supplemental dietary composition, including GAKIC, which enhances muscle performance and/or recovery from fatigue. The present invention also relates to methods of enhancing muscle performance and/or recovery from fatigue by consuming a supplemental dietary composition that includes GAKIC. The present invention also provides for a method of manufacturing a supplemental dietary composition, including GAKIC, which enhances muscle performance and/or recovery from fatigue.

### Background of the Invention

Ketoacids and cationic or dibasic amino acids are known to improve athletic dynamic muscle strength and muscle work, and recovery from acute exhaustive anaerobic strength training exercise. For example, U.S. Patent No. 6,100,287 ("the '287 patent"), which is incorporated herein by reference in its entirety, discloses a supplemental dietary composition containing a glycine and L-arginine (in a monohydrochloride salt form) alpha-ketoisocaproic acid calcium to enhance muscle performance and/or recovery from fatigue. The '287 patent discloses administration of this composition in Publix® low calorie cranberry juice.

### Summary of the Invention

The present invention provides for a supplemental dietary composition which enhances muscle performance and/or recovery from fatigue. GAKIC, or glycine and L-arginine (which is preferably in base form but may also be in salt, e.g., monohydrochloride salt, form) alpha-ketoisocaproic acid calcium, has a strong bitter taste which may cause aversive reactions in individuals when ingested directly. The present invention provides for GAKIC formulations that effectively reduce, e.g., suppress, the bitter taste of GAKIC. As used herein, the term GAKIC may refer to any form of glycine and L-arginine (either in base form or in a salt, e.g., monohydrochloride salt, form) alpha-ketoisocaproic acid calcium.

For example, in an embodiment, the present invention provides a supplemental dietary composition including GAKIC and an effective amount of a flavor component, e.g., a bitter-mask flavor, polyvinylpyrrolidone ("PVP"), a sweetener such as acesulfame potassium (ACE-K), etc., that effectively reduces, e.g., suppresses, the bitter taste of GAKIC. The flavor component may be present in any amount effective to reduce, e.g., suppress, the bitter taste of GAKIC, and thus improve the palatability of GAKIC. For instance, the present invention provides a supplemental dietary composition including GAKIC and an effective amount of, e.g., bitter-mask flavor, PVP, a sweetener such as ACE-K, and/or fruit flavorings.

In an embodiment, the supplemental dietary composition of the present invention including GAKIC and an effective amount of a flavor component is in the form of a powder, tablet, caplet or drink, e.g., a ready-to-drink beverage in a polyethylene bottle or can. The supplemental dietary composition may be any form, e.g., a powdered beverage mix, a low-calorie powdered beverage mix, etc. Alternatively, the supplemental dietary composition may be in the form of a coated tablet or caplet. For example, the flavor component may be provided in the coating of a coated tablet or caplet. In such an embodiment, the coating may include a flavor component and a supplemental dietary composition that includes part-hydrolyzed polyvinyl alcohol, titanium dioxide, polyethylene glycol (PEG), and/or talc, and may further include hydroxypropyl methylcellulose, soy lecithin, and/or polysorbate.

In an embodiment, the present invention may provide a supplemental dietary composition including GAKIC and an effective amount of a flavor component, wherein the flavor component includes a bitter-mask flavor, e.g., PVP. The bitter-mask flavor may be present in any amount that effectively reduces, e.g., suppresses, the bitter taste of GAKIC. For example, the bitter-mask flavor may be present in an amount between about 0.01 % and about 10 % by weight of the supplemental dietary composition. In an embodiment, the bitter-mask flavor is present in an amount between about 0.1 % and about 5 %, and in another embodiment, is present in an amount that is about 0.2 % by weight of the supplemental dietary composition.

In an embodiment, the present invention may provide a supplemental dietary composition including GAKIC and an effective amount of a flavor component, wherein the flavor component includes a sweetener such as ACE-K. The ACE-K may be present in any amount sufficient to reduce, e.g., suppress, the bitter taste of GAKIC. For instance, the ACE-K can be in an amount between about 0.01 % and about 10 % by weight of the supplemental dietary composition. In an embodiment, the ACE-K is present in an amount between about 0.1 % and about 5 %, and in another embodiment, is present in an amount that is about 0.24 % by weight of the supplemental dietary composition.

In an embodiment, the present invention provides a supplemental dietary composition including GAKIC and an effective amount of a flavor component, wherein the GAKIC is present in an amount sufficient to enhance muscle performance and/or recovery from fatigue. For example, GAKIC may be present in an amount between about 10 % and about 90 % by weight of the supplemental dietary composition. In an embodiment, GAKIC may be present in an amount between about 20 % and about 80 % by weight of the supplemental dietary composition. Additionally, the supplemental dietary compositions of the present invention may contain between about 31.1 % and about 33.6 % of GAKIC by weight of the supplemental dietary composition.

In an embodiment, the present invention provides a supplemental dietary composition including GAKIC, wherein some or all of the GAKIC in the supplemental dietary composition contains fine-milled particles. Advantageously, the fine-milled particles may have an average particle size between about 50 nm and about 1 mm, and in another embodiment, between about 100 nm and about 1 µm, and in yet another embodiment, between about 200 nm and about 800 nm. The supplemental dietary composition may also include an effective amount of a flavor component. In an embodiment, the fine-milled particles are present in an amount between about 0.001 % and about 10 %, and in another embodiment, between about 0.001 % and about 5 %, and in yet another embodiment, at, e.g., about 0.003 % by weight of the supplemental dietary composition.

In an embodiment, the supplemental dietary compositions of the present invention contain GAKIC in the form of fine-milled particles, and an effective amount of a flavor component. Additionally, the supplemental dietary compositions may contain GAKIC in the form of granules and fine-milled particles, and an effective amount of a flavor component. In an embodiment, the supplemental dietary compositions contain GAKIC in the form of granules and fine-milled particles in a core, and an effective amount of a flavor component in a coating surrounding the core.

The present invention provides for methods of enhancing muscle performance and/or recovery from fatigue by consuming the supplemental dietary compositions of the present invention. For example, in an embodiment, the present invention provides for methods of increasing fatigue resistance index, increasing total work output, and/or improving dynamic performance during concentric or eccentric contraction, by consuming the supplemental dietary compositions of the present invention. As set forth above, the use of GAKIC in the manner described herein may provide various effects or benefits. For example, the supplemental dietary composition may perform, provide or enable one or more of the following: reduction of muscle fatigue toxin; getting more explosive reps and performance in minutes; a substantially immediate 10.5% increase in strength; a substantially immediate increase in muscle power; more explosive reps and performance substantially immediately; sustaining of greater muscle force (concentric torque); sustaining of greater muscle torque; an increase in fatigue resistance; enhancement of muscle work output; improvement of performance compared to carbohydrate placebo; an increase in ability to sustain muscle work by up to about 12%; improvement in resistance to fatigue by an average of 28% at the beginning of exercise; providing an ideal environment for intense muscle anaerobic exercise; an increase in overall performance by delaying muscle fatigue; demonstrable results in greater concentric muscle work; improvement of dynamic muscle function under intense exhaustive anaerobic conditions; an increase in ability to sustain muscle force, total muscle work and delay fatigue; provide gains in muscle strength and size over time (due to the overload principle); force muscles to contract at max or near max tension of a given period of time; and attenuation of a drop in mean power output. The methods of enhancing muscle performance and/or recovery from fatigue by consuming the supplemental dietary compositions of the present invention may be used on a human or other animals.

The present invention also provides for a method of manufacturing a supplemental dietary composition which enhances muscle performance and/or recovery from fatigue. For example, in an embodiment, the present invention provides for a method of manufacturing a supplemental dietary composition by combining GAKIC and an effective amount of a flavor component that reduces, e.g., suppresses, the bitter taste of GAKIC. The method of manufacturing the supplemental dietary composition may include preparing a mixture of GAKIC, forming a core from the mixture, and coating the core with a coating that contains an effective amount of a flavor component to form the supplemental dietary composition.

In an embodiment, the method of manufacturing the supplemental dietary composition includes preparing a mixture of GAKIC, fine-milling the mixture, and combining an effective amount of a flavor component with the mixture to form the supplemental dietary composition. For instance, the method of manufacturing the supplemental dietary composition may include preparing a mixture of GAKIC, fine-milling the mixture, forming a core from the mixture, and coating the core with a coating that contains an effective amount of a flavor component to form the supplemental dietary composition.

In another embodiment, the method of manufacturing the supplemental dietary composition includes preparing a first mixture of GAKIC, granulating the first mixture to obtain granules, fine-milling a second mixture of GAKIC to produce fine-milled particles, combining the granules with the fine-milled particles to form a third mixture, and combining an effective amount of a flavor component with the third mixture to form the supplemental dietary composition. The method of manufacturing the supplemental dietary composition may also include, e.g., preparing a first mixture of GAKIC, granulating the first mixture to obtain granules, fine-milling a second mixture of GAKIC to produce fine-milled particles, combining the granules with the fine-milled particles to form a core, and coating the core with a coating that contains an effective amount of a flavor component to form the supplemental dietary composition.

### Detailed Description of the Invention

The term "an effective amount", as used herein with respect to the flavor component, refers to an amount sufficient to reduce, e.g., suppress, the bitter taste of GAKIC or otherwise improve the palatability of the GAKIC. As set forth above, the term GAKIC, as used herein, may refer to any form of glycine and L-arginine (either in base form or in a salt, e.g., monohydrochloride salt, form) alpha-ketoisocaproic acid calcium. Preferably, the present invention provides for GAKIC which includes L-arginine in base form. Use of the free base may offer the advantage that molar formulations utilizing L-arginine free base require only about 82.69% of the gram amount required for utilizing L-arginine HCL, thereby enabling the use of a smaller serving size to achieve a comparable benefit, as compared to GAKIC that includes L-arginine in a salt, e.g., monohydrochloride salt, form.

The present invention, according to an embodiment, provides for a supplemental dietary composition including GAKIC which, e.g., enhances muscle performance and/or recovery from fatigue and reduces, e.g., suppresses, the bitter taste of GAKIC. For example, in an embodiment, the present invention provides a supplemental dietary composition including GAKIC and an effective amount of a flavor component such as, e.g., bitter-mask flavor, PVP, a sweetener such as acesulfame potassium (ACE-K), etc.

In an embodiment, which is set forth in additional detail in Example 1, the present invention provides for a supplemental dietary composition including GAKIC, microcrystalline cellulose, hydroxypropyl cellulose, Opadry II gray, Opadry fx silver, corscarmellose sodium, stearic acid, magnesium stearate, silica, and/or ACE-K. This embodiment of the present invention may provide for a supplemental dietary composition which enhances muscle performance and/or recovery from fatigue and reduces, e.g., suppresses, the bitter taste of GAKIC.

In another embodiment, set forth in additional detail in Example 2, the present invention provides for a supplemental dietary composition including GAKIC, maltodextrin, citric acid, sodium citrate, sodium gluconate, prosweet flavor, calcium silicate, fruit punch flavor, dextrose, red flecks, acesulfame potassium, bitter mask flavor, PVP, orange flavor, sucralose and FD&C Red #40. This embodiment may also provide for a supplemental dietary composition which enhances muscle performance and/or recovery from fatigue and reduces, e.g., suppresses, the bitter taste of GAKIC.

In another embodiment, set forth in additional detail in Example 3, the present invention provides for a supplemental dietary composition including GAKIC, dextrose, maltodextrin, citric acid, sodium citrate, sodium gluconate, fruit punch flavor, ACE-K, bitter-mask flavor, PVP, orange flavor, sucralose, and/or FD & C Red #40. This embodiment may also provide for a supplemental dietary composition which enhances muscle performance and/or recovery from fatigue and reduces, e.g., suppresses, the bitter taste of GAKIC.

A discussion of some of these ingredients is set forth below:

### GAKIC

GAKIC (glycine and L-arginine ― in a base form or in a monohydrochloride saltof alpha-ketoisocaproic acid calcium), is a combination of ketoacids and amino acids that enhance muscle performance and/or recovery from fatigue.

In a preferred embodiment, illustrated in further detail by Examples 1 through 3, GAKIC contains L-arginine (45 %), alpha-ketoisocaproic acid calcium salt (29 %), and L-glycine (18%).

GAKIC may be present in the supplemental dietary composition in any amount sufficient to enhance muscle performance and/or recovery from fatigue. For example, GAKIC may be present in an amount between about 10 % and about 90 % by weight of the supplemental dietary composition. Preferably, the supplemental dietary compositions of the present invention contain GAKIC in an amount between about 20 % and about 80 % by weight of the supplemental dietary composition. More preferably, GAKIC is present in an amount of, e.g., about 33.645% by weight of the supplemental dietary composition.

According to an embodiment of the present invention, the supplemental dietary composition may include between about 10 g and 12 g of GAKIC per serving. For instance, in an embodiment, the supplemental dietary composition may include about 10.2 g of GAKIC per serving, the GAKIC including L-arginine in a base form. Alternatively, in an embodiment, the supplemental dietary composition may include about 11.8 g of GAKIC per serving, the GAKIC including L-arginine in a monohydrochloride salt form. The use of L-arginine in base form enables a smaller serving size to be used.

### Flavor Component

As used herein, a "flavor component" refers to any ingredient, e.g., excipient or combination of excipients, that may reduce, e.g., suppress, the bitter taste of GAKIC, either alone or in combination with other flavor components or excipients.

Examples of flavor components may include, but are not limited to, bitter-mask flavor, PVP, sweeteners such as ACE-K, fruit flavors e.g., fruit punch flavor and/or orange flavor, microcrystalline cellulose, hydroxypropyl cellulose, sugars such as dextrose, sucrose, fructose, and/or sucralose, maltodextrin, citric acid, sodium citrate, and/or sodium gluconate.

The flavor component may be present in any amount effective to reduce, e.g., suppress, the bitter taste of GAKIC. For example, the flavor component may be present in an amount between about 10 % and about 90 % by weight of the supplemental dietary composition. Preferably, the flavor component is present in an amount between about 10 % and about 80 %, and more preferably between about 20 % and about 70 % by weight of the supplemental dietary composition.

According to an embodiment of the present invention, the supplemental dietary composition may include about 23 g of flavor component per serving. Alternatively, the supplemental dietary composition may include about 3 g of flavor component per serving.

### Bitter-Mask Flavor

As used herein, "bitter-mask flavor" refers to a proprietary group of ingredients that is specifically formulated and used to mask the bitter taste of GAKIC. The bitter-mask flavor may be present in any amount effective to reduce, e.g., suppress, the taste of GAKIC. For example, the supplemental dietary composition of the present invention may contain bitter-mask flavor, e.g., PVP, in an amount of about 0.0675 grams per serving.

### ACE-K

ACE-K, or acesulfame potassium, may also be used to mask the taste of GAKIC. ACE-K is a high-intensity, non-caloric sweetener and is approximately 200 times sweeter than sucrose. ACE-K is not metabolized by the body and is excreted unchanged. ACE-K is sold under the brand name Sunett^{™} by Nutrinova, Inc.

Compositions of the present invention may contain ACE-K in any amount sufficient to reduce, e.g., suppress, the taste of GAKIC. According to an embodiment of the present invention, the supplemental dietary composition may include about 0.08 g of ACE-K per serving. Alternatively, the supplemental dietary composition of the present invention may include about 0.00004 g of ACE-K per serving.

The dosage form of the supplemental dietary composition of the present invention may be provided as a powder beverage mix, tablet, caplet or drink, e.g., ready-to-drink beverage, etc. The supplemental dietary composition may alternatively be provided as a capsule, a liquid ready-to-drink beverage, as a ready-to-eat bar product, or in any other forms commonly used in the art.

In a preferred embodiment, the supplemental dietary composition of the present invention is in the form of a coated tablet or caplet. The coating prevents the bitter taste of GAKIC, which is preferably in the core, from contacting the palette during oral administration, and also enables the tablet or caplet to be swallowed more easily as compared to a tablet or caplet that is not coated. This ease of swallowing may be especially advantageous, particularly for compositions containing GAKIC, since the preferred serving size is approximately 8 tablets or caplets. Preferably, the flavor component is in the coating. More preferably, the coating contains ACE-K, Opadry II gray, and/or Opadry fx silver. Other excipients commonly used in the art may also be added in the coating.

The supplemental dietary compositions of the present invention may be provided in accordance with customary processing techniques for dietary supplements wherein the ingredients are suitably processed and compressed into a tablet or caplet with suitable excipients. For instance, the supplemental dietary compositions of the present invention may be processed and compressed into tablets or caplets with microcrystalline cellulose, hydroxypropyl cellulose, croscarmellose sodium, stearic acid, magnesium stearate, and/or silica.

The supplemental dietary compositions of the present invention may also be provided in accordance with customary processing techniques for dietary supplements wherein the ingredients are suitably processed into the form of a powdered beverage mix. For instance, the supplemental dietary compositions of the present invention may be processed with dextrose, maltodextrin, citric acid, sodium citrate, sodium gluconate, sucralose, flavoring agents, and/or food coloring. Those of skill in the art will appreciate that compositions of the present invention may contain a variety of excipients.

The supplemental dietary compositions of the present invention may also contain ingredients in the form of fine-milled particles. Formulations containing fine-milled particles may improve absorption of the supplemental dietary composition by the body. In a preferred embodiment, the supplemental dietary composition contains fine-milled particles having an average particle size between about 50 nm and about 1 mm, more preferably between about 100 nm and about 1 µm, and even more preferably between about 200 nm and about 800 nm.

As used herein, the term "fine-milled" or "fine-milling" refers to the process of micronization. Micronization is a mechanical process that involves the application of force to a particle, thereby resulting in the break-up of the particle. Such force may be applied by collision of particles at high speeds. Micronization may be carried out, for example, by grinding or by an air-jet micronizer. In a preferred embodiment, fine-milled particles are obtained by jet-milling with nitrogen and compressed air.

As used herein, the term "particle size" refers to particle diameter. The term "average particle size" means that at least 50 % of the particles in a sample will have the specified particle size. Preferably, at least 80 % of the particles in a sample will have the specified particle size, and more preferably, at least 90 % of the particles in a sample will have the specified particle size.

The size of a particle can be determined by any of the methods commonly known in the art. The following methods, for example, may be used: sieves, sedimentation, electrozone sensing (coulter counter), microscopy, or Low Angle Laser Light Scattering (LALLS). The preferred methods for the present invention are the methods most commonly used in the pharmaceutical industry, such as laser diffraction, e.g., light scattering Coulter Delsa 440SX.

In an embodiment, e.g., caplet form, of the present invention, the supplemental dietary composition may contain fine-milled particles in an amount of about 0.0011 grams per serving, while in another embodiment, e.g., powder form, of the present invention, the supplemental dietary composition may contain fine-milled particles in an amount of about 0.0010 grams per serving.

In an embodiment, the supplemental dietary compositions of the present invention contain GAKIC entirely in the form of fine-milled particles, and an effective amount of a flavor component. In an alternative embodiment of the present invention, the supplemental dietary composition may contain GAKIC in the form of both granules and fine-milled particles, and an effective amount of a flavor component. For example, the supplemental dietary compositions of the present invention may contain GAKIC in the form of granules and fine-milled particles in a core, and an effective amount of a flavor component in a coating surrounding the core.

As used herein, the term "granule" refers to particles screened from a mesh size of 20 to 80. The term "granulate" refers to processes where granules are produced. Granulation may be carried out by any methods known in the art.

The present invention provides for methods of enhancing muscle performance and/or recovery from fatigue by consuming a supplemental dietary composition containing GAKIC and an effective amount of a flavor component. For example, the present invention provides methods of increasing fatigue resistance index, increasing total work output, and/or improving dynamic performance during concentric or eccentric contraction, by consuming the supplemental dietary compositions of the present invention. As set forth above, the use of GAKIC in the manner described herein may provide various effects or benefits. For example, the supplemental dietary composition may perform, provide or enable one or more of the following: reduction of muscle fatigue toxin; getting more explosive reps and performance in minutes; a substantially immediate 10.5% increase in strength; a substantially immediate increase in muscle power; more explosive reps and performance substantially immediately; sustaining of greater muscle force (concentric torque); sustaining of greater muscle torque; an increase in fatigue resistance; enhancement of muscle work output; improvement of performance compared to carbohydrate placebo; an increase in ability to sustain muscle work by up to about 12%; improvement in resistance to fatigue by an average of 28% at the beginning of exercise; providing an ideal environment for intense muscle anaerobic exercise; an increase in overall performance by delaying muscle fatigue; demonstrable results in greater concentric muscle work; improvement of dynamic muscle function under intense exhaustive anaerobic conditions; an increase in ability to sustain muscle force, total muscle work and delay fatigue; provide gains in muscle strength and size over time (due to the overload principle); force muscles to contract at max or near max tension of a given period of time; and attenuation of a drop in mean power output. The methods of enhancing muscle performance and/or recovery from fatigue by consuming the supplemental dietary compositions of the present invention may be used on a human or other animals.

In an embodiment, e.g., a powder, the present invention provides for methods of enhancing muscle performance and/or recovery from fatigue by consuming a supplemental dietary composition containing GAKIC, dextrose, maltodextrin, citric acid, sodium citrate, sodium gluconate, fruit punch flavor, ACE-K, bitter-mask flavor, orange flavor, sucralose, and/or FD & C Red #40.

In another embodiment, e.g., a powder, the present invention provides for methods of enhancing muscle performance and/or recovery from fatigue by consuming a supplemental dietary composition containing GAKIC, maltodextrin, citric acid, sodium citrate, sodium gluconate, prosweet flavor, calcium silicate, fruit punch flavor, dextrose, red flecks, acesulfame potassium, bitter mask flavor, orange flavor, sucralose and FD&C Red #40.

In another embodiment, e.g., a caplet, the present invention provides for methods of enhancing muscle performance and/or recovery from fatigue by consuming a supplemental dietary composition containing GAKIC, microcrystalline cellulose, hydroxypropyl cellulose, Opadry II gray, Opadry fx silver, corscarmellose sodium, stearic acid, magnesium stearate, silica, and/or ACE-K.

Compositions of the present invention are optionally administered to any animal for of enhancing muscle performance and/or recovery from fatigue. The animal is preferably a human, a horse, a dog or a pig. The human may be an athlete or a non-athlete.

In a preferred method of enhancing muscle performance and/or recovery from fatigue, the supplemental dietary composition of the present invention is administered once daily, and more preferably is administered approximately 45 minutes before a high intensity workout. The supplemental dietary composition of the present invention is optionally administered at meals. In an embodiment, a serving is 8 tablets or caplets.

The present invention also provides for a method of making a supplemental dietary composition useful for enhancing muscle performance and/or recovery from fatigue without the bitter taste associated with GAKIC. For example, in an embodiment, the method of manufacturing the supplemental dietary composition includes combining GAKIC with an effective amount of a flavor component to form the supplemental dietary composition. The method of manufacturing the supplemental dietary composition may also include preparing a mixture of GAKIC, forming a core from the mixture, and coating the core with a coating that contains an effective amount of a flavor component to form the supplemental dietary composition.

In an embodiment, the method of manufacturing the supplemental dietary composition includes preparing a mixture of GAKIC, fine-milling the mixture, and combining an effective amount of a flavor component with the mixture to form the supplemental dietary composition. For instance, in an embodiment, the method of manufacturing the supplemental dietary composition includes preparing a mixture of GAKIC, fine-milling the mixture, forming a core from the mixture, and coating the core with a coating that contains an effective amount of a flavor component to form the supplemental dietary composition.

In another embodiment, the method of manufacturing the supplemental dietary composition includes preparing a first mixture of GAKIC, granulating the first mixture to obtain granules, fine-milling a second mixture of GAKIC to produce fine-milled particles, combining the granules with the fine-milled particles to form a third mixture, and combining an effective amount of a flavor component with the third mixture to form the supplemental dietary composition. The method of manufacturing the supplemental dietary composition may also include preparing a first mixture of GAKIC, granulating the first mixture to obtain granules, fine-milling a second mixture of GAKIC to produce fine-milled particles, combining the granules with the fine-milled particles to form a core, and coating the core with a coating that contains an effective amount of a flavor component to form the supplemental dietary composition.

In a preferred embodiment, illustrated in further detail by Example 4, the method of manufacturing the supplemental dietary composition includes premixing L-glycine, L-arginine, and alpha-ketoisocaproic acid calcium monohydrochloride salt to form a GAKIC premix, grinding the GAKIC premix, mixing 7 % polyvinylpyrrolidone (PVP) with the GAKIC premix to form a GAKIC-PVP mixture, granulating the GAKIC-PVP mixture to obtain granules, screening the granules at a mesh size of 20 to 80, combining the granules with fine-milled GAKIC particles, and adding an effective amount of bitter-mask flavor and/or a sweetener such as ACE-K to form the supplemental dietary composition. Preferably, the granules and fine-milled GAKIC particles are formed into a core, and the core is coated with a coating that contains an effective amount of a bitter-mask flavor and/or a sweetener such as ACE-K to form the supplemental dietary composition. Preferably, the method further includes the step of checking for uniformity/homogeneity and then aliquoting into a serving for formulation.

Although the following examples illustrate the practice of the present invention in some of its embodiments, the examples should not be construed as limiting the scope of the invention. Other embodiments will be apparent to one skilled in the art from consideration of the specification and examples.

### Example 1

A serving of a GAKIC composition comprises the following ingredients in caplet form.

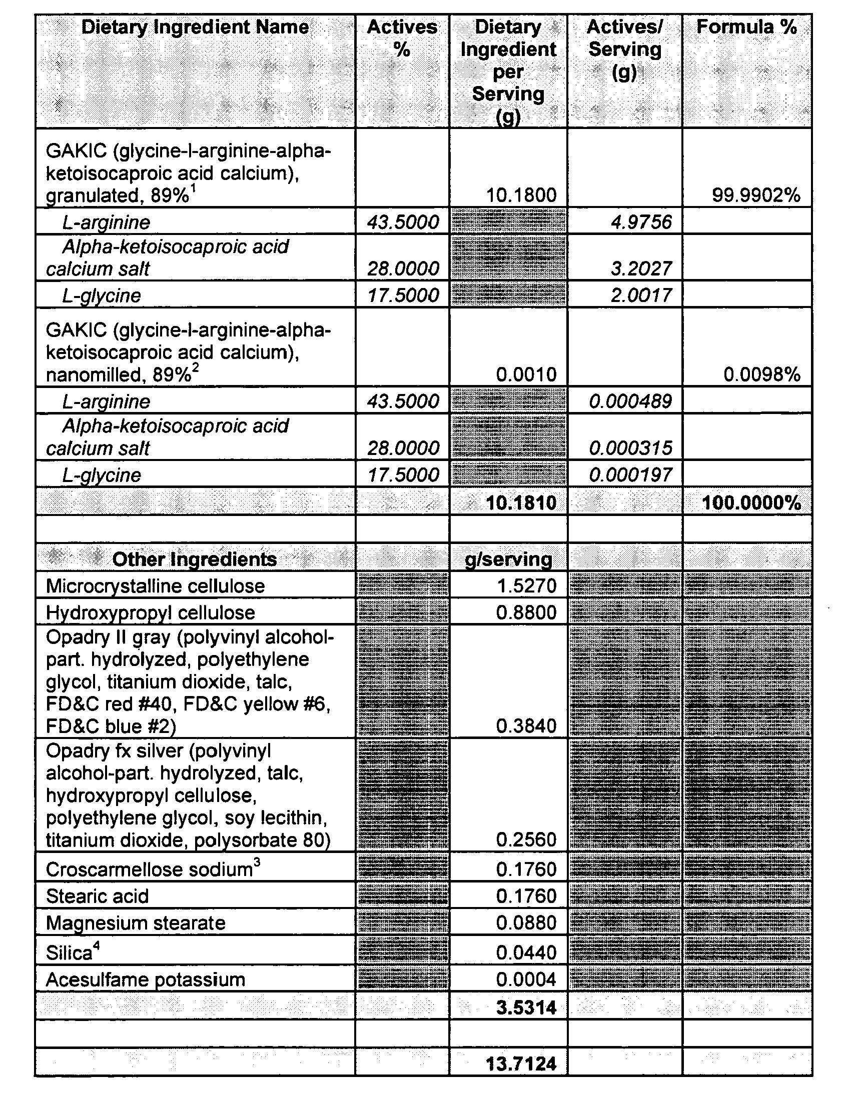

One serving, which consists of 8 caplets, of the supplement of Example 1 is consumed once a day, preferably on workout days and 45 minutes before a high intensity workout.

The supplement of Example 1 may also include the following excipients added, e.g., during the manufacturing process:

| **Ingredient Details** | | | |
|---|---|---|---|
| Primary Ingredient | Secondary Ingredient | % in Primary Ingredient | Amount in Formula (g) |
| ¹GAKIC, granulated, 89% | Polyvinylpyrrolidone (PVP) | 4 | 0.4573 |
| ²GAKIC, nanomilled 89% | Polyvinylpyrrolidone (PVP) | 4 | 0.000044 |
| ³Croscaramelose sodium | Sodium chloride | < 0.05 | 0.000088 |
| ³Croscaramelose sodium | Sodium glycolate | < 0.05 | 0.000088 |
| ⁴Silica | Sodium sulphate | < 4 | 0.00176 |
| | | | |

### Example 2

A serving of a GAKIC composition comprises the following ingredients in powdered beverage mix form.

| **Dietary Ingredient Name** | **Actives %** | **Dietary Ingredient per serving (g)** | **Actives/ serving (g)** | **Formula %** |
|---|---|---|---|---|
| GAKIC (glycine-I-arginine-alpha-ketoisocaproic acid calcium), granulated | | 10.1800 | | 99.990% |
| *I-arginine* | *48.85%* | | *4.9724* | |
| *calcium keto isocaproic acid* | *31.48%* | | *3.2042* | |
| *I-glycine* | *19.68%* | | *2.0034* | |
| GAKIC (glycine-I-arginine-alpha-ketoisocaproic acid calcium), nanomilled | | 0.0010 | | 0.010% |
| *I-arginine* | *48.85%* | | *0.0005* | |
| *calcium keto isocaproic acid* | *31.48%* | | *0.0003* | |
| *I-glycine* | *19.68%* | | *0.0002* | |
| | | | | |
| **Weight (g)** | | **10.1810** | | **100.000%** |
| | | | | |

| **Other Ingredients** | | **g/serving** | | |
|---|---|---|---|---|
| Maltodextrin 10 DE | | 18.3100 | | |
| Citric acid, fine gran | | 2.1760 | | |
| Sodium citrate | | 0.5000 | | |
| Sodium gluconate | | 0.5000 | | |
| Prosweet flavor, nat | | 0.3400 | | |
| Calcium silicate | | 0.2040 | | |
| Fruit Punch flavor, N&A | | 0.1687 | | |
| Dextrose 99 DE | | 0.1000 | | |
| Spectra flecks, red | | 0.0850 | | |
| Acesulfame potassium | | 0.0800 | | |
| Bitter mask flavor, nat | | 0.0675 | | |
| Orange flavor, nat | | 0.0169 | | |
| Sucralose | | 0.0100 | | |
| FD&C Red #40 | | 0.0025 | | |
| **Weight (g)** | | **22.5606** | | |
| **Total weight (g)** | | **32.7416** | | |

One 33 g serving of the supplemental dietary composition of Example 2 may be consumed once a day, preferably on workout days and 45 minutes before a high intensity workout.

The supplement of Example 2 may also include the following excipients added, e.g., during the manufacturing process:

| Primary Ingredient | Secondary Ingredient | Qty in Primary Ingredient | Qty in Formula (g) |
|---|---|---|---|
| ¹Prosweet flavor, nat | dextrose | 90 - 99% | |
| | natural flavor | 1 - 10% | |
| ²Fruit Punch flavor, N&A | maltodextrin | | |
| | modified food starch | | |
| | corn syrup solids | | |
| | N&A flavor | | |
| ³Red spectra flecks | gum arabic | 99.6 - 99.7% | |
| | FD&C Red #40 | 0.3 - 0.4% | |
| ⁴Bitter mask flavor, nat | maltodextrin | 96% | 0.0648 |
| | natural flavors | 3% | 0.0020 |
| | gum acacia | 1% | 0.0007 |
| ⁵Orange flavor, nat | maltodextrin | 47% | 0.0169 |
| | silicon dioxide | 35% | 0.0059 |
| | citric acid | 14% | 0.0024 |
| | natural flavors | 4% | 0.0007 |

| | | | |
|---|---|---|---|
| * 10.18 g of granulated GAKIC is supplied by 11.4382 g of 89% granulated GAKIC with 4% polyvinylpyrrolidone (PVP, Providone K-30) ** 0.001 g of nanomilled GAKIC is supplied by 0.0011 g of 89% nanomilled GAKIC with 4% polyvinylpyrrolidone (PVP, Providone K-30) | | | |

### Example 3

A serving of a GAKIC composition comprises the following ingredients in powdered beverage mix form.

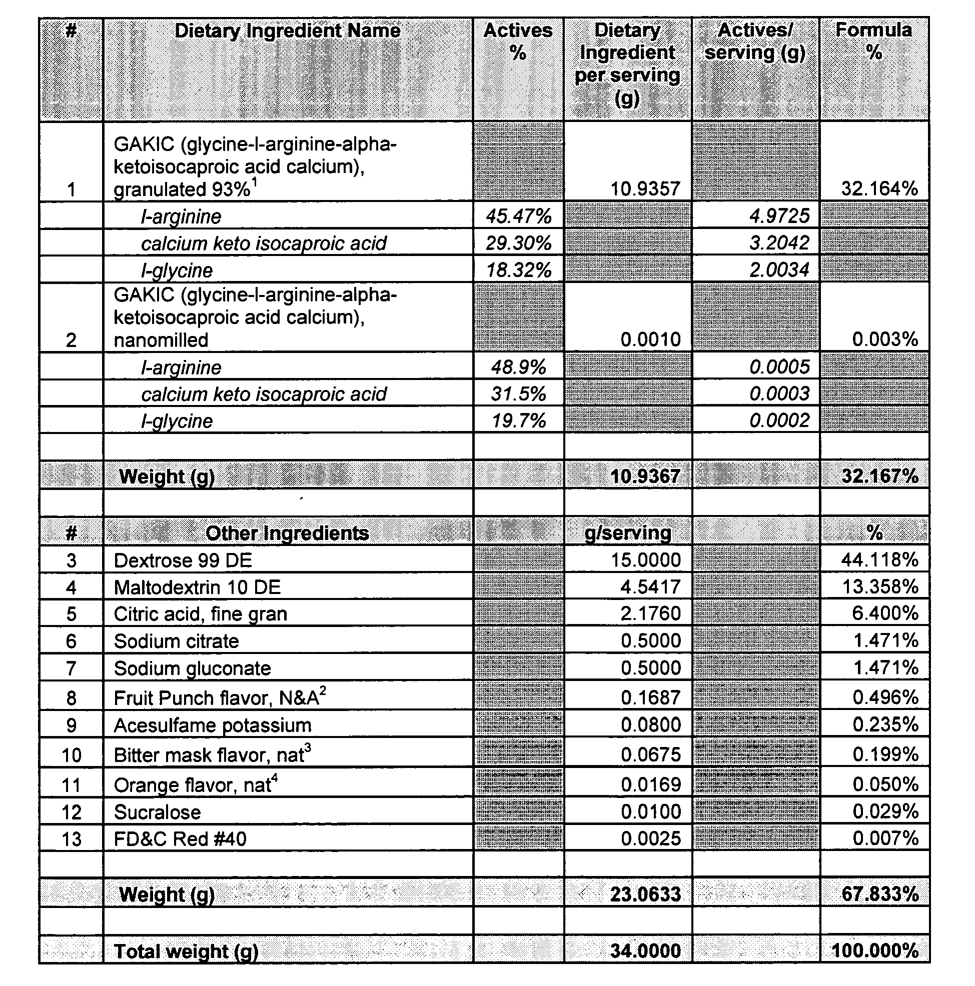

One 34 g serving of the supplemental dietary composition of Example 3 may be consumed once a day, preferably on workout days and 45 minutes before a high intensity workout.

The supplement of Example 3 may also include the following excipients added, e.g., during the manufacturing process:

| Primary Ingredient | Secondary Ingredient | Qty in Primary Ingredient | Qty in Formula (g) |
|---|---|---|---|
| ¹Prosweet flavor, nat | dextrose | 90 - 99% | |
| | natural flavor | 1 - 10% | |
| ²Fruit Punch flavor, N&A | maltodextrin | | |
| | modified food starch | | |
| | corn syrup solids | | |
| | N&A flavor | | |
| ³Red spectra flecks | gum arabic | 99.6 - 99.7% | |
| | FD&C Red #40 | 0.3 - 0.4% | |
| ⁴Bifter mask flavor, nat | maltodextrin | 96% | 0.0648 |
| | natural flavors | 3% | 0.0020 |
| | gum acacia | 1% | 0.0007 |
| ⁵Orange flavor, nat | maltodextrin | 47% | 0.0169 |
| | silicon dioxide | 35% | 0.0059 |
| | citric acid | 14% | 0.0024 |
| | natural flavors | 4% | 0.0007 |

| | | | |
|---|---|---|---|
| * 10.18 g of granulated GAKIC is supplied by 11.4382 g of 89% granulated GAKIC with 4% polyvinylpyrrolidone (PVP, Providone K-30) ** 0.001 g of nanomilled GAKIC is supplied by 0.0011 g of 89% nanomilled GAKIC with 4% polyvinylpyrrolidone (PVP, Providone K-30) | | | |

### Example 4

L-arginine, calcium keto isocaproic acid, and L-glycine are grinded and blended into a premix, which is transferred into a fluid bed for granulation. Air is blown into the premix, and 7 % PVP in water solution is added to the premix. The mixture is form granulated with final PVP at %, and the granules are dried in a granulator and transferred to a screener. The granules are collected using a mesh size of 20-80, checked for uniformity/homogeneity, and then aliquoted into a serving for formulation into a powered beverage mix, tablet, caplet or ready-to-drink beverage product.

## Claims

1. A supplemental dietary composition for enhancing at least one of muscle performance and recovery from fatigue, the supplemental dietary composition comprising glycine and L-arginine alpha-ketoisocaproic acid calcium (GAKIC), wherein the L-arginine is in a base form.

2. The supplemental dietary composition of claim 1, wherein the supplemental dietary composition includes an effective amount of a flavor component that at least reduces the bitter taste of the GAKIC.

3. The supplemental dietary composition of claim 1, wherein the flavor component is at least one of a bitter-mask flavor, acesulfame potassium (ACE-K), and fruit flavorings.

4. The supplemental dietary composition of claim 1, wherein the supplemental dietary composition is in the form of a tablet or caplet.

5. The supplemental dietary composition of claim 1, wherein the supplemental dietary composition is in the form of one of a powdered beverage mix and a ready-to-drink beverage.

6. The supplemental dietary composition of claim 4, wherein the supplemental dietary composition is in the form of a coated tablet or caplet.

7. The supplemental dietary composition of claim 6, wherein the flavor component is provided in a coating of the tablet or caplet.

8. The supplemental dietary composition of claim 1, wherein the GAKIC includes at least some fine-milled particles having an average particle size between about 50 nm and about 1 mm.

9. A supplemental dietary composition for enhancing muscle performance or recovery from fatigue, the supplemental dietary composition comprising:
glycine and L-arginine alpha-ketoisocaproic acid calcium (GAKIC); and
an effective amount of a flavor component that at least reduces the bitter taste of GAKIC.

10. The supplemental dietary composition of claim 9, wherein the L-arginine is in a base form.

11. The supplemental dietary composition of claim 9, wherein the flavor component is at least one of a bitter-mask flavor, acesulfame potassium (ACE-K), and fruit flavorings.

12. The supplemental dietary composition of claim 9, wherein the supplemental dietary composition is in the form of a tablet or caplet.

13. The supplemental dietary composition of claim 9, wherein the supplemental dietary composition is in the form of one of a powdered beverage mix and a ready-to-drink beverage.

14. The supplemental dietary composition of claim 12, wherein the supplemental dietary composition is in the form of a coated tablet or caplet.

15. The supplemental dietary composition of claim 14, wherein the flavor component is provided in a coating of the tablet or caplet.

16. The supplemental dietary composition of claim 9, wherein the GAKIC includes at least some fine-milled particles having an average particle size between about 50 nm and about 1 mm.

17. A supplemental dietary composition for enhancing at least one of muscle performance and recovery from fatigue, the supplemental dietary composition comprising glycine and L-arginine alpha-ketoisocaproic acid calcium (GAKIC), wherein the GAKIC includes at least some fine-milled particles having an average particle size between about 50 nm and about 1 mm.

18. The supplemental dietary composition of claim 17, wherein the supplemental dietary composition includes an effective amount of a flavor component that at least reduces the bitter taste of the GAKIC.

19. The supplemental dietary composition of claim 17, wherein the flavor component is at least one of a bitter-mask flavor, acesulfame potassium (ACE-K), and fruit flavorings.

20. The supplemental dietary composition of claim 17, wherein the supplemental dietary composition is in the form of a tablet or caplet.

21. The supplemental dietary composition of claim 17, wherein the supplemental dietary composition is in the form of one of a powdered beverage mix and a ready-to-drink beverage.

22. The supplemental dietary composition of claim 21, wherein the supplemental dietary composition is in the form of a coated tablet or caplet.

23. The supplemental dietary composition of claim 22, wherein the flavor component is provided in a coating of the tablet or caplet.

24. The supplemental dietary composition of claim 17, wherein the L-arginine is in a base form.

25. A method of enhancing at.least one of muscle performance and recovery from fatigue comprising the step of:
consuming a supplemental dietary composition comprising glycine and L-arginine alpha-ketoisocaproic acid calcium (GAKIC), wherein the L-arginine is in a base form.

26. The method of claim 25, wherein the supplemental dietary composition includes an effective amount of a flavor component that at least reduces the bitter taste of the GAKIC.

27. The method of claim 25, wherein the flavor component is at least one of a bitter-mask flavor, acesulfame potassium (ACE-K), and fruit flavorings.

28. The method of claim 25, including consuming the supplemental dietary composition in the form of one of a tablet, being at least one of coated and uncoated, a caplet, being at least one of coated and uncoated, a powdered beverage mixture and a ready-to-drink beverage.

29. The method of claim 25, wherein the GAKIC includes at least some fine-milled particles having an average particle size between about 50 nm and about 1 mm.

30. The method of claim 25, wherein the step of consuming is performed once daily.

31. The method of claim 25, wherein the step of consuming is performed about 45 minutes before engaging in a high-intensity workout.

32. A method of enhancing at least one of muscle performance and recovery from fatigue comprising the step of:
consuming a supplemental dietary composition comprising glycine and L-arginine alpha-ketoisocaproic acid calcium (GAKIC), and an effective amount of a flavor component that at least reduces the bitter taste of the GAKIC.

33. The method of claim 32, wherein the L-arginine is in a base form.

34. The method of claim 32, wherein the flavor component is at least one of a bitter-mask flavor, acesulfame potassium (ACE-K), and fruit flavorings.

35. The method of claim 32, including consuming the supplemental dietary composition in the form of one of a tablet, being at least one of coated and uncoated, a caplet, being at least one of coated and uncoated, a powdered beverage mixture and a ready-to-drink beverage.

36. The method of claim 32, wherein the GAKIC includes at least some fine-milled particles having an average particle size between about 50 nm and about 1 mm.

37. The method of claim 32, wherein the step of consuming is performed once daily.

38. The method of claim 32, wherein the step of consuming is performed about 45 minutes before engaging in a high-intensity workout.

39. A method of enhancing at least one of muscle performance and recovery from fatigue comprising the step of:
consuming a supplemental dietary composition comprising glycine and L-arginine alpha-ketoisocaproic acid calcium (GAKIC), wherein the GAKIC includes at least some fine-milled particles having an average particle size between about 50 nm and about 1 mm.

40. The method of claim 39, wherein the supplemental dietary composition includes an effective amount of a flavor component that at least reduces the bitter taste of the GAKIC.

41. The method of claim 39, wherein the flavor component is at least one of a bitter-mask flavor, acesulfame potassium (ACE-K), and fruit flavorings.

42. The method of claim 39, including consuming the supplemental dietary composition in the form of one of a tablet, being at least one of coated and uncoated, a caplet, being at least one of coated and uncoated, a powdered beverage mixture and a ready-to-drink beverage.

43. The method of claim 39, wherein the L-arginine is in a base form.

44. The method of claim 39, wherein the step of consuming is performed once daily.

45. The method of claim 39, wherein the step of consuming is performed about 45 minutes before engaging in a high-intensity workout.

46. A method of manufacturing a supplemental dietary composition that enhances muscle performance or recovery from fatigue, the method comprising the steps of:
preparing a mixture of glycine and L-arginine alpha-ketoisocaproic acid calcium (GAKIC);
combining an effective amount of a flavor component with the mixture; and
formulating the mixture into the supplemental dietary composition.

47. The method of claim 46, wherein the flavor component is at least one of a bitter-mask flavor, acesulfame potassium (ACE-K) and fruit flavoring.

48. The method of claim 46, wherein the L-arginine is in a base form.

49. The method of claim 46, wherein the preparing step includes the sub-step of fine-milling at least some portion of the GAKIC.

50. The method of claim 46, further comprising the step of adding to the mixture at least one of a bitter-mask flavor, ACE-K, dextrose, maltodextrin, citric acid, sodium citrate, sodium gluconate, fruit punch flavor, orange flavor, sucralose, and food coloring.

51. The method of claim 46, further comprising the step of adding to the mixture at least one of a bitter-mask flavor, ACE-K, microcrystalline cellulose, hydroxypropyl cellulose, part-hydrolyzed polyvinyl alcohol, titanium dioxide, PEG, talc, hydroxypropyl methylcellulose, soy lecithin, polysorbate, croscarmellose sodium, stearic acid, magnesium stearate, and silica.

52. The method of claim 46, wherein the mixture is aliquoted into a tablet, caplet, a powdered beverage mixture and a ready-to-drink beverage.
